# EUROPEAN PATENT APPLICATION

(11) **EP 4 672 404 A1**
(43) Date of publication of application: **31.12.2025**
(21) Application number: 24847504.8
(22) Date of filing: 18.01.2024
(51) Int. Cl.: H01M 10/0525, H01M 10/058, H01M 4/131, H01M 50/103

(54) **BATTERY CELL, BATTERY, AND ELECTRIC APPARATUS**

(30) Priority: 28.07.2023 CN 202310936624
(71) Applicant: Contemporary Amperex Technology Co., Limited, Ningde, Fujian 352100 (CN)
(72) Inventor: WEI, Xichen, Ningde, Fujian 352100 (CN); WANG, Dandan, Ningde, Fujian 352100 (CN); XUE, Junpeng, Ningde, Fujian 352100 (CN)
(74) Representative: Kraus & Lederer PartGmbB
(86) International application number: PCT/CN2024/073048
(87) International publication number: WO 2025/025533

(57) **Abstract**

A battery cell, a battery, and a power consuming apparatus. The battery cell includes an electrode assembly and an outer package. The electrode assembly includes a positive electrode plate. The positive electrode plate includes a positive electrode current collector and a positive electrode film layer arranged on at least one surface of the positive electrode current collector. The positive electrode film layer includes a positive electrode active material. The positive electrode active material includes layered lithium-containing transition metal oxide in monocrystalline morphology. A length of the battery cell is denoted as a, and a width of the battery cell is denoted as b. a is greater than or equal to 180 mm, and a/b ranges from 2.0 to 10.5. In this way, the battery can take into account high energy density and long cycle life.

## Description

### CROSS-REFERENCE TO RELATED APPLICATIONS

The present application claims priority to Chinese Patent Application No. 202310936624.3, entitled "BATTERY CELL, BATTERY, AND POWER CONSUMING APPARATUS" and filed on July 28, 2023, which is incorporated herein by reference in its entirety.

### TECHNICAL FIELD

The present application relates to a battery cell, a battery, and a power consuming apparatus.

### BACKGROUND

Recently, the batteries are used in energy storage power systems such as water power plant, fire power plant, wind power plant, and solar power plant, and are used in a plurality of fields such as electric tools, electric bicycles, electric motorcycles, electric vehicles, military equipment, and aerospace. With an increasingly wide application range of the batteries, people have increasingly more demands on using the batteries. However, how to enable a battery to take into account other electrochemical performance on the premise of having high energy density is still a difficulty in current battery development.

### SUMMARY

The present application provides a battery cell, a battery, and a power consuming apparatus, which can enable the battery to take into account high energy density and long cycle life.

A first aspect of the present application provides a battery cell. The battery cell includes an electrode assembly and an outer package.

The electrode assembly includes a positive electrode plate. The positive electrode plate includes a positive electrode current collector and a positive electrode film layer arranged on at least one surface of the positive electrode current collector. The positive electrode film layer includes a positive electrode active material. The positive electrode active material includes layered lithium-containing transition metal oxide in monocrystalline morphology.

The battery cell has a length direction, a width direction, and a thickness direction. The thickness direction of the battery cell is a thickness direction of the positive electrode plate.

A length of the battery cell is denoted as a, and a width of the battery cell is denoted as b. a is greater than or equal to 180 mm, and a/b ranges from 2.0 to 10.5.

The positive electrode active material includes the layered lithium-containing transition metal oxide in the monocrystalline morphology, the length a of the battery cell using the positive electrode active material is greater than or equal to 180 mm, and the ratio a/b of the length a of the battery cell to the width b of the battery cell ranges from 2.0 to 10.5, so that a battery can take into account high energy density and long cycle life.

In any embodiment, a ranges from 190 mm to 1200 mm, and optionally ranges from 250 mm to 1200 mm.

In any embodiment, a ranges from 350 mm to 1200 mm; and/or a/b ranges from 3.1 to 10.5.

In any embodiment, a ranges from 250 mm to 800 mm; and/or a/b ranges from 2.5 to 8.0.

In any embodiment, a ranges from 350 mm to 800 mm, and optionally ranges from 420 mm to 800 mm; and/or a/b ranges from 3.1 to 8.0, and optionally ranges from 3.3 to 8.0.

When the length a of the battery cell falls within the given range, an electrode plate can have a large effective dimension on the premise of ensuring normal welding of a tab portion. In this way, a group margin of the battery cell can be improved, and mass ratios of the positive electrode active material and a negative electrode active material in the entire battery cell can also be improved, so that the battery can also have the high energy density. When the length a of the battery cell falls within the given range, electrolyte solution infiltration in an entire region of the electrode assembly including a central region can be further improved, so that an electrolyte solution is prone to infiltrate and re-flow into the entire electrode plate. In this way, transmission of lithium ions is facilitated, so that the battery can also have the long cycle life.

When the ratio a/b of the length a of the battery cell to the width b of the battery cell falls within the given range, cycle performance of the battery can be further improved, and the battery can also have the high energy density.

In any embodiment, b ranges from 30 mm to 140 mm, and optionally ranges from 60 mm to 125 mm. When the width b of the battery cell falls within the given range, the cycle performance of the battery can be further improved, and the battery can also have the high energy density.

In any embodiment, a thickness of the battery cell is denoted as c. c is less than or equal to 70 mm, and optionally ranges from 10 mm to 60 mm.

In any embodiment, the outer package is of a soft pack material or a hard shell material.

In any embodiment, the electrode assembly is a laminated structure or a wound structure, and is optionally the laminated structure. When the electrode assembly is the laminated structure, the battery cell can have a high group margin, so that the energy density of the battery can be further improved.

In any embodiment, the electrode assembly includes a main body portion and a tab portion extending out from the main body portion. A dimension of the tab portion in an extension direction of the main body portion after the tab portion is bent is less than or equal to 20 mm, and is optionally less than or equal to 15 mm. In this way, the electrode plate can have the large effective dimension, so that the group margin of the battery cell can be improved, and the mass ratios of the positive electrode active material and the negative electrode active material in the entire battery cell can also be improved, so that the battery can also have the high energy density.

In any embodiment, the tab portion includes a positive electrode tab portion and a negative electrode tab portion. The positive electrode tab portion and the negative electrode tab portion extend out from two opposite ends of the main body portion of the electrode assembly. In this way, the positive electrode tab portion and the negative electrode tab portion can be wider, thereby facilitating improvement of electronic conductivity of the electrode plate.

In any embodiment, the positive electrode active material includes the layered lithium-containing transition metal oxide in the monocrystalline morphology and layered lithium-containing transition metal oxide in polycrystalline morphology. Optionally, in the positive electrode active material, a quantity ratio of the layered lithium-containing transition metal oxide in the monocrystalline morphology is denoted as S1, and a quantity ratio of the layered lithium-containing transition metal oxide in the polycrystalline morphology is denoted as S2. S1>S2.

In any embodiment, in the positive electrode active material, the quantity ratio of the layered lithium-containing transition metal oxide in the monocrystalline morphology is denoted as S1. S1 is greater than or equal to 70%, and optionally ranges from 80% to 99%.

The positive electrode active material mainly includes the layered lithium-containing transition metal oxide in the monocrystalline morphology, so that the battery can take into account the high energy density, the long cycle life, and good power performance.

In any embodiment, a volume distribution particle size Dv50 of the positive electrode active material is less than or equal to 8 µm, and optionally ranges from 2 µm to 5.5 µm.

In any embodiment, a volume distribution particle size Dv90 of the positive electrode active material is less than or equal to 18 µm, and optionally ranges from 3 µm to 12 µm.

The volume distribution particle size Dv50 and/or Dv90 of the positive electrode active material is adjusted to fall within the foregoing range, so that a side reaction of the battery can be reduced, and a capacity fade rate of the battery can be reduced. In this way, the battery has the long cycle life, and the battery can also have the good power performance.

In any embodiment, the electrode assembly includes a negative electrode plate. The negative electrode plate includes a negative electrode current collector and a negative electrode film layer arranged on at least one surface of the negative electrode current collector. The negative electrode film layer includes a negative electrode active material. The negative electrode active material includes a carbon material. Optionally, the carbon material includes one or more of artificial graphite and natural graphite.

In any embodiment, the electrode assembly includes the negative electrode plate. The negative electrode plate includes the negative electrode current collector and the negative electrode film layer arranged on the at least one surface of the negative electrode current collector. The negative electrode film layer includes the negative electrode active material. The negative electrode active material includes a silicon-based material.

Optionally, the silicon-based material includes one or more of a silicon element, an alkali metal element, and an alkali-earth metal element.

Optionally, a mass ratio of the silicon-based material in the negative electrode active material is greater than or equal to 5%, and more optionally ranges from 8% to 20%.

In any embodiment, a volume distribution particle size Dv10 of the negative electrode active material ranges from 4 µm to 8 µm, and optionally ranges from 4.5 µm to 6.5 µm.

In any embodiment, a volume distribution particle size Dv50 of the negative electrode active material ranges from 6 µm to 15 µm, and optionally ranges from 8 µm to 13 µm.

In any embodiment, a volume distribution particle size Dv90 of the negative electrode active material ranges from 15 µm to 30 µm, and optionally ranges from 18 µm to 25 µm.

In any embodiment, the electrode assembly includes a negative electrode plate. The negative electrode plate includes a negative electrode current collector and a negative electrode film layer arranged on at least one surface of the negative electrode current collector. The negative electrode film layer includes a negative electrode active material. The negative electrode film layer has a first surface away from the negative electrode current collector and a second surface arranged opposite to the first surface. A thickness of the negative electrode film layer is denoted as H. A region within a thickness range from the first surface of the negative electrode film layer to 0.3H is denoted as a first region of the negative electrode film layer. A region within a thickness range from the second surface of the negative electrode film layer to 0.3H is denoted as a second region of the negative electrode film layer. The first region includes a first negative electrode active material. The second region includes a second negative electrode active material. The first negative electrode active material includes a first carbon material. The second negative electrode active material includes a second carbon material. A volume distribution particle size Dv50 of the first carbon material is less than a volume distribution particle size Dv50 of the second carbon material.

A structure of the negative electrode film layer on a single side of the negative electrode current collector is adjusted, and differential coating is performed, so that the battery can have the good power performance. The first carbon material is in direct contact with the electrolyte solution, and the volume distribution particle size Dv50 of the first carbon material is less than the volume distribution particle size Dv50 of the second carbon material, so that the first region of the negative electrode film layer has many ion intercalation channels, thereby facilitating rapid migration of ions to the second carbon material. In this way, the battery can have the good power performance on the premise of having the high energy density and the long cycle life.

In any embodiment, a specific surface area of the first carbon material is smaller than a specific surface area of the second carbon material. The first carbon material is in direct contact with the electrolyte solution, and the specific surface area of the first carbon material is smaller than the specific surface area of the second carbon material, to help reduce a side reaction of the battery, thereby helping the battery have the good cycle performance.

In any embodiment, a degree of graphitization of the first carbon material is less than a degree of graphitization of the second carbon material. The degree of graphitization of the first carbon material is small, so that a layer spacing thereof is large, thereby facilitating rapid de-intercalation of ions. Therefore, the degree of graphitization of the first carbon material is adjusted to be less than the degree of graphitization of the second carbon material, thereby facilitating improvement of the power performance of the battery.

In any embodiment, the first carbon material includes artificial graphite.

In any embodiment, the second carbon material includes natural graphite.

In any embodiment, the first negative electrode active material and/or the second negative electrode active material further includes a silicon-based material. Optionally, the first negative electrode active material and the second negative electrode active material further include the silicon-based material.

A second aspect of the present application provides a battery, including the battery cell in the first aspect of the present application.

A third aspect of the present application provides a power consuming apparatus, including the battery in the second aspect of the present application.

The power consuming apparatus in the present application includes the battery provided in the present application, and therefore has at least the same advantages as the battery.

### BRIEF DESCRIPTION OF THE DRAWINGS

To describe technical solutions of embodiments of the present application more clearly, the following briefly describes the accompanying drawings for describing the embodiments of the present application. Apparently, the accompanying drawings described below are only some embodiments of the present application, and a person of ordinary skill in the art may further obtain other accompanying drawings according to the accompanying drawings without creative efforts.
FIG. 1 is a schematic structural diagram of a battery cell according to some embodiments of the present application;
FIG. 2 is a schematic structural diagram of an electrode assembly of the battery cell shown in FIG. 1;
FIG. 3 is a schematic exploded view of an outer package of the battery cell shown in FIG. 1;
FIG. 4 is a schematic structural diagram of a battery cell according to some other embodiments of the present application;
FIG. 5 is a schematic structural diagram of an electrode assembly of the battery cell shown in FIG. 4;
FIG. 6 is a schematic exploded view of an outer package of the battery cell shown in FIG. 4;
FIG. 7 is a schematic structural diagram of a battery cell according to some still other embodiments of the present application;
FIG. 8 is a schematic structural diagram of an electrode assembly of the battery cell shown in FIG. 7;
FIG. 9 is another schematic structural diagram of an electrode assembly of the battery cell shown in FIG. 7;
FIG. 10 is a schematic exploded view of an outer package of the battery cell shown in FIG. 7;
FIG. 11 is a schematic structural diagram of a negative electrode plate according to some embodiments of the present application;
FIG. 12 is a schematic structural diagram of a negative electrode plate according to some other embodiments of the present application;
FIG. 13 is a schematic structural diagram of a negative electrode plate according to some still other embodiments of the present application; and
FIG. 14 is a schematic diagram of a power consuming apparatus according to some embodiments of the present application.

In the accompanying drawings, the components are not drawn to actual scale. Reference numerals are as follows: 5: battery cell; 51: case; 52: electrode assembly; 521: main body portion; 522: tab portion; 53: end cover assembly; 531: electrode terminal; 10: negative electrode plate; 101: negative electrode current collector; 102: negative electrode film layer; 1021: first region; 1022: second region; 1023: middle region; 102a: first surface; 102b: second surface; X: length direction; Y: width direction; and Z: thickness direction.

### DETAILED DESCRIPTION

Hereinafter, embodiments of a battery cell, a battery, and a power consuming apparatus of the present application are specifically disclosed in the detailed description with appropriate reference to the accompanying drawings. However, there will be cases where unnecessary detailed descriptions are omitted. For example, there are cases where detailed descriptions of well-known matters and repeated descriptions of actually identical structures are omitted. This is to avoid unnecessary redundancy in the following descriptions and to facilitate the understanding by a person skilled in the art. In addition, the accompanying drawings and the following descriptions are provided for a person skilled in the art to fully understand the present application, and are not intended to limit the subject matter described in the claims.

A "range" disclosed in the present application is defined in a form of a lower limit and an upper limit. A given range is defined by selecting a lower limit and an upper limit, and the selected lower limit and upper limit define boundaries of a particular range. The range defined in this way may include or exclude end values, and may be arbitrarily combined, that is, any lower limit can be combined with any upper limit to form a range. For example, if ranges of 60 to 120 and 80 to 110 are listed for specific parameters, it is also expected to be understood as ranges of 60 to 110 and 80 to 120. In addition, if minimum range values 1 and 2 are listed, and if maximum range values 3, 4, and 5 are listed, the following ranges can all be expected: 1 to 3, 1 to 4, 1 to 5, 2 to 3, 2 to 4, and 2 to 5. In the present application, unless otherwise specified, a numerical range "a to b" represents an abbreviated representation of any combination of real numbers between a to b, where both a and b are real numbers. For example, a value range "0 to 5" indicates that all real numbers between "0 to 5" are listed in this specification, and "0 to 5" is only an abbreviated representation of these value combinations. In addition, when a parameter is expressed as an integer greater than or equal to 2, it is equivalent to disclosing that the parameter is, for example, an integer of 2, 3, 4, 5, 6, 7, 8, 9, 10, 11, 12, or the like.

If there is no special explanation, all embodiments and optional embodiments of the present application may be combined to form a new technical solution. In addition, the technical solution shall be included in the disclosed content of the present application.

If there is no special explanation, all technical features and optional technical features of the present application may be combined to form a new technical solution. In addition, the technical solution shall be included in the disclosed content of the present application.

If there is no special explanation, all steps of the present application may be performed sequentially or randomly, and preferably sequentially. For example, that "the method includes step (a) and step (b)" indicates that the method may include step (a) and step (b) performed sequentially, or the method may include step (b) and step (a) performed sequentially. For example, that "the method may further include step (c)" indicates that step (c) may be added to the method in any order. For example, the method may include step (a), step (b), and step (c), may include step (a), step (c), and step (b), or may include step (c), step (a), and step (b).

If there is no special explanation, in the present application, the terms "first", "second", and the like are used to distinguish different objects, rather than to describe a specific order or primary-secondary relationship.

In the present application, the term "plurality of" or "at least one" indicates two or more.

In the descriptions of the embodiments of the present application, if there is no special explanation, a first feature being located "above" or "below" a second feature may be the first feature being in a direct contact with the second feature, or the first feature being in an indirect contact with the second feature through an intermediary. In addition, the first feature being located "above" the second feature may be the first feature being located directly above or obliquely above the second feature, or may simply indicate that the first feature is higher in level than the second feature. The first feature being located "below" the second feature may be the first feature being located directly below or obliquely below the second feature, or may simply indicate that the first feature is lower in level than the second feature.

Unless otherwise specified, terms used in the present application have well-known meanings usually understood by a person skilled in the art.

Unless otherwise specified, numerical values of parameters mentioned in the present application may be tested by using various test methods commonly used in the art, for example, testing may be performed according to a test method provided in the embodiments of the present application. Unless otherwise specified, the test temperature of the parameters is 25°C.

Dv10, Dv50, and Dv90 of a material (for example, a positive electrode active material, or a negative electrode active material) have meanings well-known in the art, and may be measured by using instruments and methods known in the art. For example, measurement may be conveniently performed by using a laser particle size analyzer (for example, Malvern Mastersizer 3000) with reference to GB/T 19077-2016. Physical definition of Dv90 corresponds to a particle size at which the cumulative volume distribution percentage of the material reaches 90%. Physical definition of Dv50 corresponds to a particle size at which the cumulative volume distribution percentage of the material reaches 50%. Physical definition of Dv10 corresponds to a particle size at which the cumulative volume distribution percentage of the material reaches 10%.

A specific surface area of a material (for example, a positive electrode active material, or a negative electrode active material) has a meaning well-known in the art, and may be measured by using an instrument and a method known in the art. For example, with reference to GB/T 19587-2017, a nitrogen adsorption specific surface area analysis test method may be used for testing, and a BET (Brunauer Emmett Teller) method is used for calculation. The test instrument may be a Tri-Star 3020 type specific surface area pore size analysis tester from Micromeritics company, the United States.

A quantity ratio of layered lithium-containing transition metal oxide in monocrystalline (or polycrystalline) morphology in the positive electrode active material has a meaning well-known in the art, and may be measured by using an instrument and a method known in the art. For example, the positive electrode active material may be laid on and adhered to a conductive adhesive, to form a to-be-tested sample whose length×width is 6 cm×1.1 cm. Particle morphology is tested by using a scanning electronic mirror and an energy dispersive spectrometer (for example, ZEISS Sigma300). For the test, reference may be made to JY/T010-1996. To ensure accuracy of a test result, 20 different regions may be randomly selected from the to-be-tested sample for a scanning test, and at a magnification rate (for example, 1000 times or more), statistics on a ratio of a quantity of layered lithium-containing transition metal oxide in the monocrystalline (or polycrystalline) morphology to a total quantity of particles in each region is collected, that is, statistics on a quantity ratio of the layered lithium-containing transition metal oxide in the monocrystalline (or polycrystalline) morphology in the region is collected. An average value of test results of the 20 test regions is used as the quantity ratio of the layered lithium-containing transition metal oxide in the monocrystalline (or polycrystalline) morphology in the positive electrode active material.

In the present application, the term "monocrystal" further includes a quasi-monocrystal (also referred to as a mono-like). The quasi-monocrystal (mono-like) usually refers to a particle formed by agglomerating a small quantity of primary particles (for example, no more than 10 primary particles). The polycrystal refers to a secondary particle formed by agglomerating a plurality of primary particles.

It should be noted that, in the embodiments of the present application, samples may be taken from a cold-pressed positive (or negative) electrode film layer for various parameter tests for the positive (or negative) electrode active material. In an example of taking the negative electrode active material from the cold-pressed negative electrode film layer, a cold-pressed negative electrode plate may be placed in deionized water, so that the negative electrode active material naturally falls off. Suction filtration and drying are performed on the negative electrode active material, and then the dried negative electrode active material is sintered at 400°C for 2h to remove a binder and a conductive agent, to obtain the negative electrode active material.

A battery provided in the embodiments of the present application is a single physical module including one or more battery cells to provide a higher voltage and a higher capacity. For example, the battery provided in the present application may include a battery cell, a battery module, a battery pack, or the like. The battery cell is the smallest unit constituting the battery, and can achieve functions of charging and discharging independently. When a plurality of battery cells are provided, the plurality of battery cells are connected in series, in parallel, or in series-parallel by using a bus component. In some embodiments, the battery may be a battery module. When a plurality of battery cells are provided, the plurality of battery cells are arranged and fixedly form one battery module. In some embodiments, the battery may be a battery pack. The battery pack includes a box body and a battery cell, and the battery cell or the battery module is accommodated in the box body. In some embodiments, the box body may serve as a part of a chassis structure of a vehicle. For example, a part of the box body may be at least a part of a floor of the vehicle, or a part of the box body may be at least a part of a cross beam and a longitudinal beam of the vehicle.

In some embodiments, the battery may be an energy storage apparatus. The energy storage apparatus includes an energy storage container, an energy storage electric cabinet, or the like.

A battery cell provided in the embodiments of the present application may include a lithium-ion battery cell.

The battery cell provided in the embodiments of the present application includes an electrode assembly and an outer package.

The battery cell has a length direction X, a width direction Y, and a thickness direction Z.

The thickness direction Z of the battery cell is a thickness direction of a positive electrode plate.

The electrode assembly may be a laminated structure or a wound structure. When the electrode assembly is the laminated structure, the battery cell includes a plurality of positive electrode plates, and the thickness direction Z of the battery cell is a thickness direction of the positive electrode plates, that is, a laminated direction of the plurality of positive electrode plates. When the electrode assembly is the wound structure, the electrode assembly includes a straight region and a bent region, the positive electrode plate includes a plurality of straight segments located in the straight region and a plurality of bent segments located in the bent region, and the thickness direction Z of the battery cell is a thickness direction of the straight segments of the positive electrode plate located in the straight region, that is, a laminated direction of the plurality of straight segments of the positive electrode plate.

The electrode assembly includes a positive electrode plate. The positive electrode plate includes a positive electrode current collector and a positive electrode film layer arranged on at least one surface of the positive electrode current collector. The positive electrode film layer includes a positive electrode active material. The positive electrode active material includes layered lithium-containing transition metal oxide in monocrystalline morphology.

A length of the battery cell is denoted as a, and a width of the battery cell is denoted as b. a is greater than or equal to 180 mm, and a/b ranges from 2.0 to 10.5.

The positive electrode active material of the battery cell provided in the embodiments of the present application includes the layered lithium-containing transition metal oxide in the monocrystalline morphology. The layered lithium-containing transition metal oxide in the monocrystalline morphology usually has a small specific surface area, and good interface stability and thermal stability, so that a side reaction of the battery can be reduced. In addition, good particle integrity can be maintained during long-term charging and discharging, so that a capacity fade rate of the battery can be reduced. Therefore, when the positive electrode active material includes the layered lithium-containing transition metal oxide in the monocrystalline morphology, the battery can have long cycle life. However, compaction density of the layered lithium-containing transition metal oxide in the monocrystalline morphology is small. In this way, energy density of the battery is low, and it is difficult to meet a demand on using a battery having long cycle life and high energy density.

The energy density of the battery can be improved by increasing the length a of the battery cell. However, after the length a of the battery cell is increased, electrolyte solution infiltration of the electrode assembly, especially electrolyte solution infiltration in a later period of cycling, becomes worse, affecting cycle performance of the battery.

The length a of the battery cell is greater than or equal to 180 mm, and the ratio a/b of the length a of the battery cell to the width b of the battery cell ranges from 2.0 to 10.5, so that the battery can take into account the high energy density and the long cycle life.

When the positive electrode active material is layered lithium-containing transition metal oxide in polycrystalline morphology, during long-term charging and discharging of the battery, the layered lithium-containing transition metal oxide in the polycrystalline morphology generates a local stress concentration along a particle boundary and develops micro cracks due to structural instability caused by anisotropic lattice contraction. In this way, the electrolyte solution is prone to infiltrate and corrode the interior of polycrystalline particles (secondary particles). In this way, many side reactions of the battery are generated, and it is difficult to meet a demand on using a battery having long cycle life.

When the positive electrode active material includes the layered lithium-containing transition metal oxide in the monocrystalline morphology but the length a of the battery cell is less than 180 mm, because the compaction density of the layered lithium-containing transition metal oxide in the monocrystalline morphology is small, when the length a of the battery cell is excessively small, the dimension design of the battery cell is insufficient to make up for a decrease in the energy density of the battery due to the layered lithium-containing transition metal oxide in the monocrystalline morphology. In this way, it is difficult to meet a demand on using a battery having high energy density.

When the positive electrode active material includes the layered lithium-containing transition metal oxide in the monocrystalline morphology, if the ratio a/b of the length a of the battery cell to the width b of the battery cell is less than 2, in this case, the length a of the battery cell is excessively small and/or the width b of the battery cell is excessively large. When the length a of the battery cell is excessively small, the dimension design of the battery cell is insufficient to make up for a decrease in the energy density of the battery due to the layered lithium-containing transition metal oxide in the monocrystalline morphology. In this way, it is difficult to meet a demand on using a battery having high energy density. When the width b of the battery cell is excessively large, the electrolyte solution infiltration is affected, and especially for the negative electrode plate, a probability of lithium plating may be further increased. In this way, when the ratio a/b of the length a of the battery cell to the width b of the battery cell is less than 2, it is also difficult to meet the demand on using the battery having the long cycle life and the high energy density. When the positive electrode active material includes the layered lithium-containing transition metal oxide in the monocrystalline morphology, if the ratio a/b of the length a of the battery cell to the width b of the battery cell is greater than 10.5, in this case, the length a of the battery cell is excessively large, the electrolyte solution is greatly affected by the gravity of the electrolyte solution, and the electrolyte solution infiltration of the electrode assembly is poor, reducing the cycle performance of the battery. In this way, it is also difficult to meet the demand on using the battery having the long cycle life and the high energy density.

The length a of the battery cell is greater than or equal to 180 mm, for example, may be 180 mm, 190 mm, 220 mm, 250 mm, 300 mm, 350 mm, 420 mm, 530 mm, 600 mm, 700 mm, 800 mm, 900 mm, 1000 mm, 1100 mm, 1200 mm, or a value within a range formed by any of the foregoing values.

In some embodiments, the length a of the battery cell may be greater than or equal to 190 mm, and optionally ranges from 190 mm to 1200 mm, 190 mm to 1000 mm, 190 mm to 800 mm, 190 mm to 600 mm, 190 mm to 420 mm, 220 mm to 1200 mm, 220 mm to 1000 mm, 220 mm to 800 mm, 220 mm to 600 mm, 220 mm to 420 mm, 250 mm to 1200 mm, 250 mm to 1000 mm, 250 mm to 800 mm, 300 mm to 1200 mm, 300 mm to 800 mm, 350 mm to 1200 mm, 350 mm to 800 mm, 420 mm to 1200 mm, or 420 mm to 800 mm.

When the length a of the battery cell falls within the given range, an electrode plate can have a large effective dimension on the premise of ensuring normal welding of a tab portion. In this way, a group margin of the battery cell can be improved, and mass ratios of the positive electrode active material and a negative electrode active material in the entire battery cell can also be improved, so that the battery can also have the high energy density. When the length a of the battery cell falls within the given range, electrolyte solution infiltration in an entire region of the electrode assembly including a central region can be further improved, so that an electrolyte solution is prone to infiltrate and re-flow into the entire electrode plate. In this way, transmission of lithium ions is facilitated, so that the battery can also have the long cycle life.

The ratio a/b of the length a of the battery cell to the width b of the battery cell is greater than or equal to 2.0, for example, may be 2.0, 2.1, 2.2, 2.3, 2.4, 2.5, 3.0, 3.1, 3.3, 3.5, 4.0, 4.2, 4.4, 5.0, 5.6, 6.0, 7.0, 8.0, 8.3, 9.0, 10.0, 10.5, 12.0, 15.0, or a value within a range formed by any of the foregoing values.

In some embodiments, the ratio a/b of the length a of the battery cell to the width b of the battery cell may range from 2.0 to 12.0, 2.5 to 12.0, 2.8 to 12.0, 3.1 to 12.0, 3.3 to 12.0, 2.0 to 10.5, 2.5 to 10.5, 2.8 to 10.5, 3.0 to 10.5, 3.1 to 10.5, 3.3 to 10.5, 2.0 to 8.0, 2.5 to 8.0, 2.8 to 8.0, 3.0 to 8.0, 3.1 to 8.0, 3.3 to 8.0, 2.0 to 5.6, 2.5 to 5.6, 2.8 to 5.6, 3.0 to 5.6, 3.1 to 5.6, 3.3 to 5.6, 2.0 to 4.4, 2.5 to 4.4, 2.8 to 4.4, 3.0 to 4.4, 3.1 to 4.4, or 3.3 to 4.4.

When the ratio a/b of the length a of the battery cell to the width b of the battery cell falls within the given range, the impact of the gravity of the electrolyte solution on the electrolyte solution can be reduced, thereby helping the electrolyte solution infiltrate the electrode assembly. In addition, expansion and contraction of the electrode plate in two directions, that is, a transverse direction and a longitudinal direction, can be more balanced, thereby facilitating stability of an interface of the electrode plate. Therefore, when the ratio a/b of the length a of the battery cell to the width b of the battery cell falls within the given range, the cycle performance of the battery can be further improved.

In addition, the dimension design of the battery cell affects a capacity of the battery cell. When the ratio a/b of the length a of the battery cell to the width b of the battery cell falls within the given range, the battery can also have the high energy density.

In some embodiments, the width b of the battery cell may be less than or equal to 140 mm, and is optionally less than or equal to 125 mm.

In some embodiments, the width b of the battery cell may range from 30 mm to 140 mm, 30 mm to 125 mm, 30 mm to 110 mm, 30 mm to 100 mm, 45 mm to 140 mm, 45 mm to 125 mm, 45 mm to 110 mm, 45 mm to 100 mm, 60 mm to 140 mm, 60 mm to 125 mm, 60 mm to 110 mm, 60 mm to 100 mm, 80 mm to 140 mm, 80 mm to 125 mm, 80 mm to 110 mm, or 80 mm to 100 mm.

When the width b of the battery cell falls within the given range, uniform infiltration and re-flow of the electrolyte solution in the electrode plate are facilitated, a probability that the central region of the electrode plate has a problem of ion reduction and precipitation caused by difficulty in infiltration and re-flow of the electrolyte solution is reduced, and an interface wrinkle problem caused by continuous contraction and expansion of the electrode plate (especially, a negative electrode plate) during charging and discharging can also be reduced. In addition, current density on a surface of the electrode plate can be balanced, and especially, a probability of negative electrode lithium plating can be reduced. Therefore, when the width b of the battery cell falls within the given range, the cycle performance of the battery can be further improved.

When the width b of the battery cell falls within the given range, the battery can also have the high energy density.

In some embodiments, a thickness c of the battery cell may be less than or equal to 70 mm, and optionally ranges from 10 mm to 60 mm, 15 mm to 60 mm, 20 mm to 60 mm, 10 mm to 50 mm, 15 mm to 50 mm, 20 mm to 50 mm, 10 mm to 40 mm, 15 mm to 40 mm, or 20 mm to 40 mm.

In some embodiments, the length a of the battery cell ranges from 350 mm to 1200 mm; and/or a/b ranges from 3.1 to 10.5.

In some embodiments, the length a of the battery cell ranges from 250 mm to 800 mm; and/or a/b ranges from 2.5 to 8.0.

In some embodiments, the length a of the battery cell ranges from 350 mm to 800 mm, and optionally ranges from 420 mm to 800 mm; and/or a/b ranges from 3.1 to 8.0, and optionally ranges from 3.3 to 8.0.

In some embodiments, the length a of the battery cell ranges from 190 mm to 1200 mm, the width b of the battery cell ranges from 30 mm to 140 mm, the thickness c of the battery cell ranges from 10 mm to 60 mm, and a/b ranges from 2.0 to 10.5.

In some embodiments, the length a of the battery cell ranges from 350 mm to 1200 mm, the width b of the battery cell ranges from 30 mm to 140 mm, the thickness c of the battery cell ranges from 10 mm to 60 mm, and a/b ranges from 3.1 to 10.5.

In some embodiments, the length a of the battery cell ranges from 250 mm to 800 mm, the width b of the battery cell ranges from 30 mm to 140 mm, the thickness c of the battery cell ranges from 10 mm to 60 mm, and a/b ranges from 2.5 to 8.0.

In some embodiments, the length a of the battery cell ranges from 350 mm to 800 mm, the width b of the battery cell ranges from 30 mm to 140 mm, the thickness c of the battery cell ranges from 10 mm to 60 mm, and a/b ranges from 3.1 to 8.0, and optionally ranges from 3.3 to 8.0.

In some embodiments, the length a of the battery cell ranges from 420 mm to 800 mm, the width b of the battery cell ranges from 30 mm to 140 mm, the thickness c of the battery cell ranges from 10 mm to 60 mm, and a/b ranges from 3.1 to 8.0, and optionally ranges from 3.3 to 8.0.

In this way, the battery can better take into account the high energy density and the long cycle life.

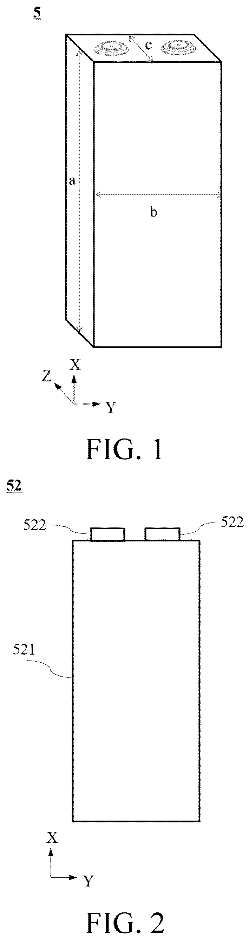

The battery cell may be a cuboid structure or a soft pack structure. This is not limited in the embodiments of the present application. As shown in FIG. 1 to FIG. 10, a battery cell 5 provided in some embodiments of the present application is a cuboid structure.

The length a of the battery cell and the width b of the battery cell refer to dimensions of a main body portion of the battery cell in the length direction X and the width direction Y, which do not include a dimension of an electrode terminal that projects out of the main body portion of the battery cell.

The length a of the battery cell may be measured by using a laser thickness measurement meter. During a test, three to five points may be randomly selected, and then an average value is taken.

The width b of the battery cell may be measured by using the laser thickness measurement meter. During a test, three to five points may be randomly selected, and then an average value is taken.

The thickness c of the battery cell may be measured by using the laser thickness measurement meter. During a test, nine points may be randomly selected, and then an average value is taken.

In addition to the positive electrode plate, the battery assembly further includes a negative electrode plate and a separator. The separator is located between the positive electrode plate and the negative electrode plate, to prevent an internal short-circuit of the battery cell.

In some embodiments, the electrode assembly may be the wound structure. For example, the positive electrode plate, the negative electrode plate, and the separator each are a strip-like structure. In the embodiments of the present application, the positive electrode plate, the separator, and the negative electrode plate may be sequentially laminated and wound for two or more times to form the electrode assembly. In the battery cell, one or more electrode assemblies may be accommodated in the outer package. When a plurality of electrode assemblies are provided, the plurality of electrode assemblies are sequentially arranged in the thickness direction Z of the battery cell.

In some embodiments, the electrode assembly may be the laminated structure. For example, the electrode assembly includes a plurality of positive electrode plates and a plurality of negative electrode plates, and the positive electrode plates and the negative electrode plates are alternately laminated in the thickness direction Z. When the electrode assembly is the laminated structure, the battery cell can have a high group margin, so that the energy density of the battery can be further improved.

The battery cell includes an electrode assembly, an outer package, and an electrolyte. The outer package is used for packaging the electrode assembly and the electrolyte.

In some embodiments, the outer package may be of a soft pack material or a hard shell material. The soft pack material may be plastic, for example, one or more of an aluminum plastic film, polypropylene (PP), polybutylene terephthalate (PBT), and polybutylene succinate (PBS). The hard shell material may include, but is not limited to, a hard plastic shell, an aluminum shell, or a steel shell.

In some embodiments, the outer package may be the hard shell material.

As shown in FIG. 1 to FIG. 10, the battery cell 5 includes an electrode assembly 52 and an outer package. The electrode assembly 52 includes a main body portion 521 and a tab portion 522 extending out from the main body portion 521. The outer package includes a case 51 and an end cover assembly 53.

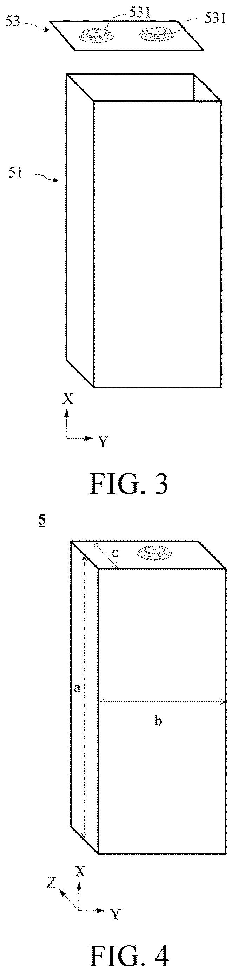

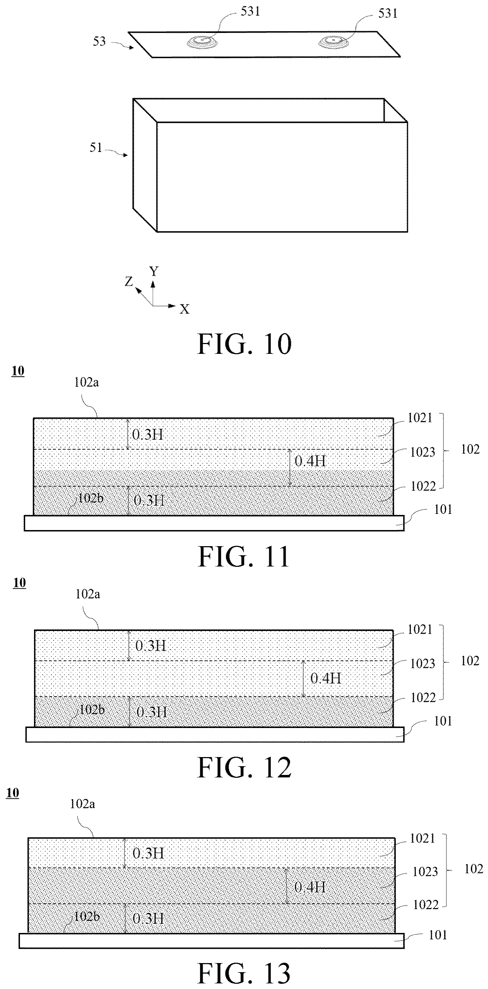

As shown in FIG. 3 and FIG. 10, the case 51 may be a hollow structure having an opening on one side. The end cover assembly 53 covers the opening of the case 51 and forms a sealing connection, to form an accommodating cavity for accommodating the electrode assembly 52 and an electrolyte.

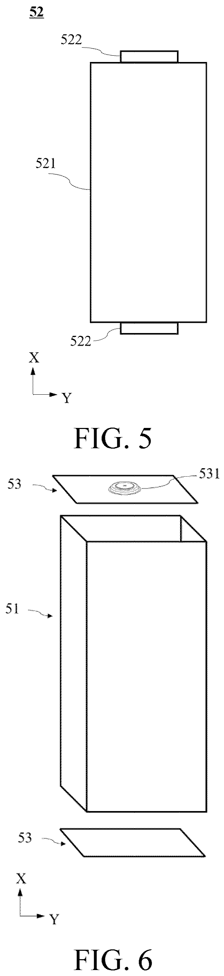

As shown in FIG. 6, the outer package may include the case 51 and two end cover assemblies 53. The case 51 is a hollow structure having openings on two opposite sides. One end cover assembly 53 correspondingly covers one opening of the case 51 and forms a sealing connection, to form an accommodating cavity for accommodating the electrode assembly 52 and the electrolyte.

The end cover assembly 53 may include an end cover. The end cover covers the opening of the case 51. The end cover may be a plurality of structures. For example, the end cover is a plate-shaped structure or a hollow structure having an opening on one end.

The end cover may be made of an insulation material (for example, plastic), or may be made of a conductive material (for example, a metal material). When the end cover is made of the conductive material, the end cover assembly may further include an insulation member, and the insulation member is located on a side of the end cover facing the electrode assembly, to insulate the end cover from the electrode assembly.

The end cover assembly 53 may further include an electrode terminal 531, and the electrode terminal 531 is mounted on the end cover. Two electrode terminals 531 may be provided. The two electrode terminals 531 are respectively defined as a positive electrode terminal and a negative electrode terminal. The positive electrode terminal and the negative electrode terminal are both configured to electrically connect to the electrode assembly 52, to output electric energy generated by the electrode assembly 52. The positive electrode terminal and the negative electrode terminal may be located on a same end of the battery cell 5, or may be located on two opposite ends of the battery cell 5.

The electrode assembly includes the main body portion and the tab portion extending out from the main body portion. In some embodiments, two tab portions 522 may be provided. The two tab portions may be respectively defined as a positive electrode tab portion and a negative electrode tab portion.

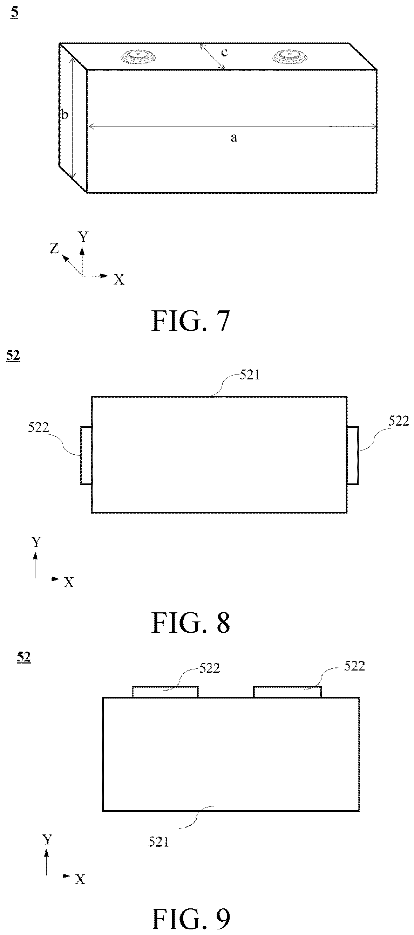

As shown in FIG. 2 and FIG. 9, the two tab portions 522 (that is, the positive electrode tab portion and the negative electrode tab portion) may extend out from a same end of the main body portion 521 of the electrode assembly 52. For example, the two tab portions 522 extend out from one end of the main body portion 521 of the electrode assembly 52 close to the end cover assembly 53.

As shown in FIG. 5 and FIG. 8, the two tab portions 522 (the positive electrode tab portion and the negative electrode tab portion) may also extend out from two opposite ends of the main body portion 521 of the electrode assembly 52. For example, the two tab portions 522 extend out from two opposite ends of the main body portion 521 of the electrode assembly 52 in the length direction X of the battery cell. In this way, the positive electrode tab portion and the negative electrode tab portion can be wider (in other words, dimensions in non-extension direction of the main body portion are larger), thereby facilitating improvement of electronic conductivity of the electrode plate.

When the two tab portions 522 extend out from the two opposite ends of the main body portion 521 of the electrode assembly 52, the electrode terminals 531 may be located on the same end of the battery cell 5, or may be located on the two opposite ends of the battery cell 5.

The main body portion 521 is a core part of the electrode assembly 52 for implementing a charging and discharging function, and the tab portion 522 is used for leading out a current generated by the main body portion 521. The main body portion 521 includes a positive electrode current collection portion of a positive electrode current collector, a positive electrode film layer, a negative electrode current collection portion of a negative electrode current collector, a negative electrode film layer, a separator, and the like. The positive electrode tab portion may include a plurality of positive electrode tabs. The negative electrode tab portion may include a plurality of negative electrode tabs.

The tab portion 522 is electrically connected to the electrode terminal 531. The tab portion 522 may be directly connected to the electrode terminal 531 through soldering, or may be indirectly connected to the electrode terminal 531 by using another member. For example, the electrode assembly 52 further includes a current collection member, and the current collection member is configured to electrically connect the electrode terminal 531 and the tab portion 522. Two current collection members may be provided. The two current collection members are respectively defined as a positive electrode current collection member and a negative electrode current collection member. The positive electrode current collection member is configured to electrically connect the positive electrode terminal to the positive electrode tab portion. The negative electrode current collection member is configured to electrically connect the negative electrode terminal to the negative electrode tab portion. When the battery cell 5 is provided with a plurality of electrode assemblies 52, positive electrode current collection members of the plurality of electrode assemblies 52 may be integrally arranged, and negative electrode current collection members of the plurality of electrode assemblies 52 may be integrally arranged.

In some embodiments, a dimension of each tab portion 522 in an extension direction of the main body portion after the tab portion 522 is bent may be less than or equal to 20 mm, and is more optionally less than or equal to 15 mm; In this way, the electrode plate can have the large effective dimension, so that the group margin of the battery cell can be improved, and the mass ratios of the positive electrode active material and the negative electrode active material in the entire battery cell can also be improved, so that a battery can also have high energy density.

The positive electrode current collector has two opposite surfaces in a thickness direction thereof, and the positive electrode film layer is arranged on either or both of the two opposite surfaces of the positive electrode current collector.

In some embodiments, the positive electrode active material may include layered lithium-containing transition metal oxide in monocrystalline morphology and layered lithium-containing transition metal oxide in polycrystalline morphology.

The layered lithium-containing transition metal oxide in the monocrystalline morphology usually has a small specific surface area, and good interface stability and thermal stability, so that a side reaction of the battery can be reduced. In addition, good particle integrity can be maintained during long-term charging and discharging, so that a capacity fade rate of the battery can be reduced. Therefore, when the positive electrode active material includes the layered lithium-containing transition metal oxide in the monocrystalline morphology, the battery can usually have long cycle life. However, a lithium ion diffusion coefficient of the layered lithium-containing transition metal oxide in the monocrystalline morphology is usually low, further reducing power performance of the battery. The layered lithium-containing transition metal oxide in the polycrystalline morphology has a high lithium ion diffusion coefficient, good electrolyte solution infiltration, and a short lithium ion diffusion path, thereby facilitating de-intercalation and intercalation of lithium ions under large current density. Therefore, when the positive electrode active material includes the layered lithium-containing transition metal oxide in the monocrystalline morphology and the layered lithium-containing transition metal oxide in the polycrystalline morphology, the battery can take into account good power performance while having the high energy density and the long cycle life.

In some embodiments, in the positive electrode active material, a quantity ratio of the layered lithium-containing transition metal oxide in the monocrystalline morphology is denoted as S1, and a quantity ratio of the layered lithium-containing transition metal oxide in the polycrystalline morphology is denoted as S2. S1>S2. In this way, the battery can take into account the high energy density, the long cycle life, and the good power performance.

In some embodiments, in the positive electrode active material, the quantity ratio of the layered lithium-containing transition metal oxide in the monocrystalline morphology is denoted as S1. S1 is greater than 50%, and is optionally greater than or equal to 70%.

In some embodiments, S1 may range from 70% to 100%, 80% to 100%, 70% to 99%, 80% to 99%, 70% to 97%, 80% to 97%, 70% to 95%, or 80% to 95%.

The positive electrode active material mainly includes the layered lithium-containing transition metal oxide in the monocrystalline morphology, so that the battery can take into account the high energy density, the long cycle life, and the good power performance.

In some embodiments, a volume distribution particle size Dv50 of the positive electrode active material may be less than or equal to 8 µm, and optionally ranges from 2 µm to 8 µm, 2 µm to 7.2 µm, 2 µm to 5.5 µm, 3 µm to 8 µm, 3 µm to 7.2 µm, or 3 µm to 5.5 µm.

In some embodiments, a volume distribution particle size Dv90 of the positive electrode active material may be less than or equal to 18 µm, and optionally ranges from 3 µm to 12 µm.

The volume distribution particle size Dv50 and/or Dv90 of the positive electrode active material is adjusted to fall within the foregoing range, so that a side reaction of the battery can be reduced, and the capacity fade rate of the battery can be reduced. In this way, the battery has the long cycle life, and the battery can also have the good power performance.

In some embodiments, the layered lithium-containing transition metal oxide may include one or more of lithium cobalt oxide and a ternary material. A general formula of the ternary material may be LiₐNi_{b}Co_{c}M_{d}OₑA_{f}. 0.8≤a≤1.2, 0<b<1, 0<c<1, 0<d<1, 1≤e≤2, and 0≤f≤1. M includes, but is not limited to, one or more of Mn, Al, Zr, Zn, Cu, Cr, Mg, Fe, V, Ti, and B. A includes, but is not limited to, one or more of N, F, S, and Cl. Optionally, 0.5≤b<1, 0.8≤b<1, or 0.9≤b<1. In this way, the energy density of the battery can be further improved.

In an example, the layered lithium-containing transition metal oxide may include, but is not limited to, one or more of LiCoO₂, LiN_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short), LiNi_{0.9}Co_{0.06}Mn_{0.04}O₂, LiNi_{0.96}CO_{0.02}Mn_{0.02}O₂, and LiNi_{0.85}Co_{0.15}Al_{0.05}O₂.

In some embodiments, the positive electrode film layer optionally includes a positive electrode conductive agent. A type of the positive electrode conductive agent is not particularly limited in the present application. In some embodiments, in an example, the positive electrode conductive agent may include one or more of superconducting carbon, conductive graphite, acetylene black, carbon black, Ketjen black, carbon dots, carbon nanotubes, graphene, and carbon nanofibers.

In some embodiments, the positive electrode film layer optionally includes a positive electrode binder. A type of the positive electrode binder is not particularly limited in the present application. In some embodiments, in an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode current collector may be a metal foil or a composite current collector. In an example of the metal foil, an aluminum foil may be used. The composite current collector may include a polymer material base layer and a layer of a metal material formed on at least one surface of the polymer material base layer. In an example, the metal material may include one or more of aluminum, an aluminum alloy, nickel, a nickel alloy, titanium, a titanium alloy, silver, and a silver alloy. In an example, the polymer material base layer may include one or more of polypropylene (PP), polyethylene terephthalate (PET), polybutylene terephthalate (PBT), polystyrene (PS), and polyethylene (PE).

The positive electrode film layer is usually formed by coating positive electrode slurry on the positive electrode current collector and performing drying and cold pressing. The positive electrode slurry is usually formed by dispersing the positive electrode active material, the positive electrode conductive agent, the positive electrode binder, and the like in a solvent and performing stirring uniformly. The solvent may be N-methylpyrrolidone (NMP) or deionized water, but is not limited thereto.

In some embodiments, the negative electrode plate may include a negative electrode current collector and a negative electrode film layer arranged on at least one surface of the negative electrode current collector. The negative electrode film layer includes a negative electrode active material.

The negative electrode current collector has two opposite surfaces in a thickness direction thereof, and the negative electrode film layer is arranged on either or both of the two opposite surfaces of the negative electrode current collector.

In some embodiments, the negative electrode current collector may be a metal foil or a composite current collector. In an example of the metal foil, a copper alloy foil, a copper foil, an aluminum foil, or an aluminum alloy foil may be used. The composite current collector may include a polymer material base layer and a layer of a metal material formed on at least one surface of the polymer material base layer. In an example, the metal material may include one or more types of copper, a copper alloy, nickel, a nickel alloy, titanium, a titanium alloy, silver, and a silver alloy. In an example, the polymer material base layer may include one or more of polypropylene (PP), polyethylene terephthalate (PET), polybutylene terephthalate (PBT), polystyrene (PS), and polyethylene (PE).

In some embodiments, the negative electrode active material may include a carbon material. Optionally, the carbon material may include one or more of artificial graphite and natural graphite.

In some embodiments, the negative electrode active material may include a silicon-based material. In this way, the energy density of the battery can be improved. The silicon-based material may include one or more of elemental silicon, silicon oxide, a silicon-carbon composite, a silicon-nitrogen composite, and a silicon alloy material.

In some embodiments, the silicon-based material may include one or more of a silicon element, an alkali metal element, and an alkali-earth metal element. Optionally, the alkali metal element includes Li. Optionally, the alkali-earth metal element includes Mg. In an example, the silicon-based material may be a silicon-based material pre-embedded with an alkali metal and/or an alkali-earth metal, for example, may be a silicon-based material pre-embedded with Li and/or Mg.

In some embodiments, a mass ratio of the silicon-based material in the negative electrode active material may be greater than or equal to 5%, and optionally ranges from 8% to 20%.

In some embodiments, the negative electrode active material may include a carbon material and a silicon-based material. A mass ratio of the silicon-based material in the negative electrode active material may range from 8% to 20%. A mass ratio of the carbon material in the negative electrode active material may be greater than or equal to 80%. In this way, the battery can take into account the high energy density and the long cycle life.

In some embodiments, a volume distribution particle size Dv10 of the negative electrode active material may range from 4 µm to 8 µm, and optionally ranges from 4.5 µm to 6.5 µm.

In some embodiments, a volume distribution particle size Dv50 of the negative electrode active material may range from 6 µm to 15 µm, and optionally ranges from 8 µm to 13 µm.

In some embodiments, a volume distribution particle size Dv90 of the negative electrode active material may range from 15 µm to 30 µm, and optionally ranges from 18 µm to 25 µm.

The volume distribution particle size Dv10, Dv50, and/or Dv90 of the negative electrode active material is adjusted to fall within the foregoing range, so that a side reaction of the battery can be reduced. In this way, the battery has the long cycle life, and the battery can also have the good power performance.

In some embodiments, the negative electrode film layer may further include a negative electrode binder. For example, the negative electrode film layer may include one or more of styrene-butadiene rubber (SBR), water-soluble unsaturated resin SR-1B, water-based acrylic resin (for example, polyacrylic acid PAA, poly(methyl methacrylate) PMMA, and sodium polyacrylate PAAS), polyacrylamide (PAM), polyvinyl alcohol (PVA), sodium alginate (SA), and carboxymethyl chitosan (CMCS). This is not limited in the embodiments of the present application.

In some embodiments, the negative electrode film layer optionally includes a negative electrode conductive agent. A type of the negative electrode conductive agent is not particularly limited in the present application. In an example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer optionally includes other additives. In an example, the other additives may include a thickener, for example, sodium carboxymethyl cellulose (CMC) or a PTC thermistor material.

The negative electrode plate does not exclude other additional functional layers than the negative electrode film layer. For example, in some embodiments, the negative electrode plate may further include a conductive primer layer (which is, for example, formed by a conductive agent and a binder) sandwiched between the negative electrode current collector and the negative electrode film layer and arranged on a surface of the negative electrode current collector. In some embodiments, the negative electrode plate may further include a protective layer covering a surface of the negative electrode film layer.

The negative electrode plate may be prepared according to the following method: A negative electrode active material, an optional negative electrode binder, an optional negative electrode conductive agent, and optional other additives are dispersed in a solvent, and stirring is uniformly performed to form negative electrode slurry. The negative electrode slurry is coated on a negative electrode current collector, and drying, cold pressing, and other procedures are performed, to form the negative electrode plate. The solvent may be N-methylpyrrolidone (NMP) or deionized water, but is not limited thereto.

In some embodiments, the negative electrode plate may also be another structure. FIG. 11 is a schematic structural diagram of a negative electrode plate according to some embodiments of the present application. FIG. 12 is a schematic structural diagram of a negative electrode plate according to some other embodiments of the present application. FIG. 13 is a schematic structural diagram of a negative electrode plate according to some still other embodiments of the present application.

As shown in FIG. 11 to FIG. 13, a negative electrode plate 10 includes a negative electrode current collector 101 and a negative electrode film layer 102 arranged on at least one surface of the negative electrode current collector 101. The negative electrode film layer 102 includes a negative electrode active material. The negative electrode film layer 102 has a first surface 102a away from the negative electrode current collector 101 and a second surface 102b arranged opposite to the first surface 102a. A thickness of the negative electrode film layer 102 is denoted as H.

The thickness H of the negative electrode film layer is a thickness of the negative electrode film layer located on a single side of the negative electrode current collector.

A region within a thickness range from the first surface 102a of the negative electrode film layer 102 to 0.3H is denoted as a first region 1021 of the negative electrode film layer 102. A region within a thickness range from the second surface 102b of the negative electrode film layer 102 to 0.3H is denoted as a second region 1022 of the negative electrode film layer 102.

The first region 1021 includes a first negative electrode active material. The second region 1022 includes a second negative electrode active material. The first negative electrode active material includes a first carbon material. The second negative electrode active material includes a second carbon material. A volume distribution particle size Dv50 of the first carbon material is less than a volume distribution particle size Dv50 of the second carbon material.

The length of the battery cell provided in the embodiments of the present application is large, thereby helping the battery have the high energy density. However, the power performance of the battery is affected. A structure of the negative electrode film layer on the single side of the negative electrode current collector is adjusted, and differential coating is performed, so that the battery can have the good power performance. The first carbon material is in direct contact with an electrolyte solution, and the volume distribution particle size Dv50 of the first carbon material is less than the volume distribution particle size Dv50 of the second carbon material, so that the first region of the negative electrode film layer has many ion intercalation channels, thereby facilitating rapid migration of ions to the second carbon material. In this way, the battery can have the good power performance on the premise of having the high energy density and the long cycle life.

In some embodiments, a specific surface area of the first carbon material may be smaller than a specific surface area of the second carbon material. The first carbon material is in direct contact with the electrolyte solution, and the specific surface area of the first carbon material is smaller than the specific surface area of the second carbon material, to help reduce a side reaction of the battery, thereby helping the battery have the good cycle performance.

In some embodiments, a degree of graphitization of the first carbon material may be less than a degree of graphitization of the second carbon material. The degree of graphitization of the first carbon material is small, so that a layer spacing thereof is large, thereby facilitating rapid de-intercalation of ions. Therefore, the degree of graphitization of the first carbon material is adjusted to be less than the degree of graphitization of the second carbon material, thereby facilitating improvement of the power performance of the battery.

In some embodiments, the first carbon material may include artificial graphite. The first carbon material includes artificial graphite, to help reduce a side reaction of the battery, thereby helping the battery have the good cycle performance.

In some embodiments, the second carbon material may include natural graphite. The surface activity of natural graphite is high. The second carbon material includes natural graphite, thereby facilitating improvement of the power performance of the battery.

In some embodiments, the first negative electrode active material may include a carbon material and a silicon-based material. Compared with a pure carbon material, when the first negative electrode active material includes the carbon material and the silicon-based material, the battery can have the high energy density under a same areal density condition.

In some embodiments, the second negative electrode active material may include a carbon material and a silicon-based material. Compared with a pure carbon material, when the second negative electrode active material includes the carbon material and the silicon-based material, the battery can have the high energy density under a same areal density condition.

In some embodiments, the first negative electrode active material and the second negative electrode active material each may include the carbon material and the silicon-based material. In this way, the battery can have the high energy density.

In some embodiments, the first negative electrode active material and the second negative electrode active material each include the carbon material and the silicon-based material.

As shown in FIG. 11 to FIG. 13, the negative electrode film layer 102 further includes a middle region 1023 that is located between the first region 1021 of the negative electrode film layer and the second region 1022 of the negative electrode film layer and that has a thickness of 0.4H (where H represents the thickness of the negative electrode film layer 102).

In some embodiments, the middle region includes the first negative electrode active material and/or the second negative electrode active material. For example, as shown in FIG. 11, the middle region 1023 includes the first negative electrode active material and the second negative electrode active material. In this case, the middle region 1023 includes a layer structure including the first negative electrode active material and a layer structure including the second negative electrode active material. The foregoing two layers may further have a layer interface. Alternatively, as shown in FIG. 12, the middle region 1023 may be the same as the first region 1021 in composition. In this way, a distribution region of the first negative electrode active material in the thickness direction of the negative electrode film layer 102 is within a thickness range from the first surface 102a of the negative electrode film layer to 0.7H. Alternatively, as shown in FIG. 13, the middle region 1023 may be the same as the second region 1022 in composition. In this way, a distribution region of the second negative electrode active material in the thickness direction of the negative electrode film layer 102 is within a thickness range from the second surface 102b of the negative electrode film layer to 0.7H.

In some embodiments, the first region, the second region, and the middle region of the negative electrode film layer further optionally include the negative electrode conductive agent and/or the negative electrode binder.

The negative electrode plate may be prepared according to the following method: First negative electrode slurry including a first negative electrode active material and second negative electrode slurry including a second negative electrode active material are provided. The second negative electrode slurry is coated on the negative electrode current collector, the first negative electrode slurry is coated on the second negative electrode slurry, and drying and cold pressing are performed, to obtain the negative electrode plate.

In some embodiments, the first negative electrode active material, an optional conductive agent, an optional binder, and other optional additives may be dispersed in a solvent (for example, deionized water), to form the first negative electrode slurry.

In some embodiments, the second negative electrode active material, an optional conductive agent, an optional binder, and other optional additives may be dispersed in a solvent (for example, deionized water), to form the second negative electrode slurry.

The first negative electrode slurry and the second negative electrode slurry may be simultaneously coated once or may be coated twice. In some embodiments, the first negative electrode slurry and the second negative electrode slurry are simultaneously coated once. Simultaneous coating once can reduce resistance of the negative electrode film layer, thereby further improving the power performance and the cycle performance of the battery.

Coating weights of the first negative electrode slurry and the second negative electrode slurry may be adjusted according to an actual case.

The first negative electrode active material, the second negative electrode active material, and the like mentioned above may be obtained through commerce.

The battery cell further includes an electrolyte. The electrolyte transmits ions between the positive electrode plate and the negative electrode plate. In some embodiments, the electrolyte uses an electrolyte solution, and the electrolyte solution includes an electrolyte salt and a solvent.

A type of the electrolyte salt is not specifically limited, and may be selected according to actual requirements. In some embodiments, the electrolyte salt may be one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium triflate (LiTFS), lithium difluoro(oxalato)borate (LiDFOB), lithium bis(oxalato)borate (LiBOB), lithium difluorophosphate (LiPO₂F₂), lithium difluorobis(oxalate) phosphate (LiDFOP), and lithium tetrafluoro(oxalato)phosphate (LiTFOP).

A type of the solvent is not specifically limited, and may be selected according to actual requirements. In some embodiments, in an example, the solvent includes, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution optionally includes an additive. For example, the additive may include a negative electrode film forming additive, may also include a positive electrode film forming additive, and may further include an additive that can improve particular battery performance, for example, an additive that improves battery overcharging performance, an additive that improves high temperature performance of the battery, or an additive that improves low temperature power performance of the battery.

The battery cell may further include a separator. The separator may be arranged between the positive electrode plate and the negative electrode plate, to prevent an internal short-circuit. A type of the separator is not particularly limited in the present application, and any well-known film with a porous structure having good chemical stability and mechanical stability may be selected.

In some embodiments, a material of the separator may include one or more of glass fiber, non-woven fabric, polyethylene, polypropylene, polyvinylidene fluoride, and polyimide. The separator may be a single layer film or a multi-layer composite film. When the separator is the multi-layer composite film, materials of the layers are the same or different.

A method for preparing a battery cell is well-known. In some embodiments, a battery cell may be formed by assembling a positive electrode plate, a separator, a negative electrode plate, and an electrolyte solution. In an example, an electrode assembly may be formed by the positive electrode plate, the separator, and the negative electrode plate through a winding process and/or a lamination process. The electrode assembly is placed in an outer package, and then is dried and then injected with the electrolyte solution. A battery cell is obtained through procedures such as vacuum packaging, standing, and formation. A plurality of battery cells may further form a battery module through a series connection, a parallel connection, or a series-parallel connection. A plurality of battery modules may further form a battery pack through a series connection, a parallel connection, or a series-parallel connection. In some embodiments, the plurality of battery cells may also directly form the battery pack.

An embodiment of the present application further provides a power consuming apparatus. The power consuming apparatus includes the battery provided in the embodiments of the present application. The battery may be used as a power source of the power consuming apparatus, or may be used as an energy storage unit of the power consuming apparatus. The power consuming apparatus may be, but is not limited to, a mobile device (for example, a mobile phone, a tablet computer, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

A type of the battery may be selected for the power consuming apparatus according to a use requirement of the power consuming apparatus. For example, a battery cell, a battery module, or a battery pack may be selected.

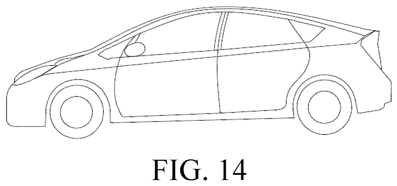

FIG. 14 is a schematic diagram of a power consuming apparatus in an example. The power consuming apparatus is an all-electric vehicle, a hybrid electric vehicle, a plug-in hybrid electric vehicle, or the like. To meet requirements of the power consuming apparatus for high power and high energy density, a battery pack or a battery module may be used.

In another example, the power consuming apparatus may be a mobile phone, a tablet computer, a notebook computer, or the like. The power consuming apparatus usually needs to be light and thin, and a battery cell may be used as a power source.

### Example

Content disclosed in the present application is described in detail in the following examples. These examples are only for illustrative purposes because various modifications and changes made without departing from the scope of the content disclosed in the present application are apparent to a person skilled in the art. Unless otherwise stated, all parts, percentages, and ratios of the following examples are based on weight, all reagents used in the examples are commercially available or synthesized according to conventional methods and can be directly used without further treatment, and all instruments used in the examples are commercially available.

### Batteries in Example 1 to Example 14, Comparative example 1, and Comparative example 2 are all prepared according to the following methods.

LiNi_{0.9}Co_{0.06}Mn_{0.04}O₂ as a positive electrode active material shown in Table 1, Super P as a conductive agent, and polyvinylidene fluoride as a binder were mixed at a weight ratio of 96.5:1.5:2, and an appropriate amount of solvent, namely, NMP, was added and stirred uniformly, to obtain positive electrode slurry. The positive electrode slurry was coated on two surfaces of a positive electrode current collector which was an aluminum foil, and drying and cold pressing were performed, to obtain a positive electrode plate. LiNi_{0.9}Co_{0.06}Mn_{0.04}O₂ as the positive electrode active material was in monocrystalline morphology, and a quantity ratio of particles in the monocrystalline morphology was greater than 98%.

Graphite as a negative electrode active material, Super P as a conductive agent, styrene-butadiene rubber as a binder, and sodium carboxymethyl cellulose as a thickener were fully stirred and mixed at a weight ratio of 96.2:0.8:1.8:1.2 in an appropriate amount of solvent, namely, deionized water, to obtain negative electrode slurry. The negative electrode slurry was coated on two surfaces of a negative electrode current collector which was a copper foil, and drying and cold pressing were performed, to obtain a negative electrode plate.

Ethylene carbonate (EC), ethyl methyl carbonate (EMC), and diethyl carbonate (DEC) were mixed at a volume ratio of 1:1:1 to obtain an organic solvent, and then LiPF₆ was dissolved in the organic solvent to prepare an electrolyte solution with a concentration of 1 mol/L.

A PP film was used as a separator, and was assembled with the prepared positive electrode plate and negative electrode plate, to obtain a laminated electrode assembly. The electrode assembly was placed in a hard shell, the electrolyte solution was injected after drying, and procedures such as vacuum packing, standing, and formation were performed, to obtain a battery shown in FIG. 4. A positive electrode tab portion and a negative electrode tab portion extended out from two opposite ends of a main body portion of the electrode assembly, and a positive electrode terminal and a negative electrode terminal were located at two opposite ends of the battery.

In Table 1, a length of the battery was denoted as a, a width of the battery was denoted as b, and a thickness of the battery was denoted as c. A length direction X, a width direction Y, and a thickness direction Z of the battery were perpendicular to each other. The thickness direction Z of the battery was a laminated direction of the positive electrode plate and the negative electrode plate.

Coated areal density and compaction density of the positive electrode plates and the negative electrode plates in the foregoing examples and comparative examples were the same.

### Performance test

### (1) Energy density test of a battery

At 25°C, the prepared battery was charged to 4.3 V at a constant current of 0.33C, and then charged at a constant voltage until a current was 0.05C. After standing for 5min, the battery was discharged to 2.8 V at the constant current of 0.33C, to obtain discharging energy Q.

Energy density (Wh/L) of the battery=discharging energy Q/volume V of the battery.

### (2) Cycle performance test of a battery

At 25°C, the prepared battery was charged to 4.3 V at a constant current of 1C, and then charged at a constant voltage until a current was 0.05C. After standing for 5min, the battery was discharged to 2.8 V at the constant current of 1C. A discharge capacity in this case was recorded, which was a discharge capacity of a first cycle. The battery was subjected to a cyclic charge-discharge test according to the foregoing method, until a capacity of the battery decayed to 80% of the discharge capacity of the first cycle. A quantity of cycles of the battery was recorded.

### (3) Power performance test of a battery

At 25°C, the prepared battery was charged to 4.3 V at a constant current of 1C, and then charged at a constant voltage until a current was 0.05C. After standing for 5min, the battery was discharged at 1C for 30min. SOC was adjusted to 50%, and a voltage U1 before the discharging was recorded. Then, the battery was discharged at a constant current of 3C for 30s, and a voltage U2 after the discharging was recorded. Power W of the battery=lower limit cut-off voltage×(U1-lower limit cut-off voltage)/(U1-U2)/3C. The lower limit cut-off voltage was 2.8 V.

**Table 1**

| Number | Morphology of a positive electrode active material | Dv50 (µm) of the positive electrode active material | Battery dimension | | | | Battery performance | |
|---|---|---|---|---|---|---|---|---|
| | | | Length a | Width b | Thickness c | a/b | Cycle performance (circle) | Energy density (Wh/L) |
| | | | mm | mm | mm | | | |
| Example 1 | Monocrystalline morphology | 3.0 | 180 | 80 | 20 | 2.3 | 2425 | 708 |
| Example 2 | Monocrystalline morphology | 3.0 | 190 | 80 | 20 | 2.4 | 2420 | 710 |
| Example 3 | Monocrystalline morphology | 3.0 | 250 | 80 | 20 | 3.1 | 2355 | 723 |
| Example 4 | Monocrystalline morphology | 3.0 | 300 | 90 | 20 | 3.3 | 2323 | 727 |
| Example 5 | Monocrystalline morphology | 3.0 | 420 | 95 | 20 | 4.4 | 2212 | 730 |
| Example 6 | Monocrystalline morphology | 3.0 | 800 | 100 | 20 | 8.0 | 2154 | 740 |
| Example 7 | Monocrystalline morphology | 3.0 | 1100 | 105 | 20 | 10.5 | 2052 | 742 |
| Example 8 | Monocrystalline morphology | 3.0 | 1200 | 120 | 20 | 10.0 | 1981 | 743 |
| Example 9 | Monocrystalline morphology | 3.0 | 250 | 125 | 20 | 2.0 | 2050 | 737 |
| Example 10 | Monocrystalline morphology | 3.0 | 250 | 100 | 20 | 2.5 | 2284 | 732 |
| Example 11 | Monocrystalline morphology | 3.0 | 250 | 60 | 20 | 4.2 | 2360 | 719 |
| Example 12 | Monocrystalline morphology | 3.0 | 250 | 45 | 20 | 5.6 | 2365 | 712 |
| Example 13 | Monocrystalline morphology | 3.0 | 300 | 90 | 10 | 3.3 | 2400 | 723 |
| Example 14 | Monocrystalline morphology | 3.0 | 300 | 90 | 60 | 3.3 | 2200 | 735 |
| Comparative example 1 | Monocrystalline morphology | 3.0 | 170 | 105 | 20 | 1.6 | 1974 | 693 |
| Comparative example 2 | Monocrystalline morphology | 3.0 | 1300 | 115 | 20 | 11.3 | 1850 | 745 |

It can be learned from test results in Table 1 that, the positive electrode active material includes a layered lithium-containing transition metal oxide in monocrystalline morphology, the length a of the battery material is greater than or equal to 180 mm, and the ratio a/b of the length a of the battery to the width b of the battery ranges from 2.0 to 10.5, so that the battery can take into account high energy density and long cycle life.

When the length a of the battery is less than 180 mm, and the ratio a/b of the length a of the battery to the width b of the battery is less than 2.0 or the ratio a/b of the length a of the battery to the width b of the battery is greater than 10.5, it is difficult to meet a demand on using a battery having long cycle life and high energy density.

It can also be learned from the test results in Table 1 that, the length a of the battery and the ratio a/b of the length a of the battery to the width b of the battery are further adjusted, so that comprehensive performance of the battery can be further improved.

**Table 2**

| Number | 50% SOC power performance (W/Wh) |
|---|---|
| Example 1 | 7.31 |
| Example 2 | 7.30 |
| Example 3 | 7.20 |
| Example 4 | 7.15 |
| Example 5 | 7.10 |
| Example 6 | 7.05 |
| Example 7 | 6.80 |
| Example 8 | 5.80 |
| Example 9 | 7.08 |
| Example 10 | 7.19 |
| Example 11 | 7.21 |
| Example 12 | 7.22 |
| Example 13 | 7.16 |
| Example 14 | 7.12 |

It can be learned from test results in Table 2 that, the length a of the battery and the ratio a/b of the length a of the battery to the width b of the battery are further adjusted, so that the battery can have good power performance.

### Example 15 to Example 17

Methods for preparing a battery are similar to that in Example 4, and a difference lies in that the positive electrode active material includes LiNi_{0.9}Co_{0.06}Mn_{0.04}O₂ in monocrystalline morphology and LiNi_{0.9}Co_{0.06}Mn_{0.04}O₂ in polycrystalline morphology. For details of respective quantity ratios, reference is made to Table 3.

**Table 3**

| Number | Morphology of a positive electrode active material | Dv50 (µm) of the positive electrode active material | Battery dimension | | | | Battery performance | | |
|---|---|---|---|---|---|---|---|---|---|
| | | | Length a | Width b | Thickness c | a/b | Cycle performance (circle) | Energy density (Wh/L) | 50% SOC power performance (W/Wh) |
| | | | mm | mm | mm | | | | |
| Example 4 | Monocrystalline morphology | 3.0 | 300 | 90 | 20 | 3.3 | 2323 | 727 | 7.15 |
| Example 15 | 80% monocrystalline morphology+20% polycrystalline morphology | 4.0 | 300 | 90 | 20 | 3.3 | 2280 | 728 | 7.18 |
| Example 16 | 50% monocrystalline morphology+50% polycrystalline morphology | 5.5 | 300 | 90 | 20 | 3.3 | 2191 | 729 | 7.21 |
| Example 17 | 20% monocrystalline morphology+80% polycrystalline morphology | 7.2 | 300 | 90 | 20 | 3.3 | 2037 | 730 | 7.26 |

It can be learned from test results in Table 3 that, the quantity ratio of layered lithium-containing transition metal oxide in the monocrystalline morphology in the positive electrode active material is greater than 50%, so that the battery can better take into account the high energy density, the long cycle life, and the good power performance.

In the foregoing examples, LiNi_{0.9}Co_{0.06}Mn_{0.04}O₂ is used as the layered lithium-containing transition metal oxide in the monocrystalline silicon and the layered lithium-containing transition metal oxide in the polycrystalline morphology. However, in the examples of the present application, the layered lithium-containing transition metal oxide is not limited thereto, and another layered lithium-containing transition metal oxide has a similar effect.

### Example 18

A method for preparing a battery is similar to that in Example 5, and a difference lies in that processes for preparing a negative electrode plate are different.

Artificial graphite as a first carbon material, Super P as a conductive agent, styrene-butadiene rubber as a binder, and sodium carboxymethyl cellulose as a thickener were fully stirred and mixed at a weight ratio of 96.2:0.8:1.8:1.2 in an appropriate amount of solvent, namely, deionized water, to obtain first negative electrode slurry. Artificial graphite as a second carbon material, Super P as a conductive agent, styrene-butadiene rubber as a binder, and sodium carboxymethyl cellulose as a thickener were fully stirred and mixed at a weight ratio of 96.2:0.8:1.8:1.2 in an appropriate amount of solvent, namely, deionized water, to obtain second negative electrode slurry.

The second negative electrode slurry was coated on two surfaces of a negative electrode current collector which was a copper foil, the first negative electrode slurry was coated on the second negative electrode slurry, and after the negative electrode current collector coated with the slurry was air-dried at room temperature, the negative electrode current collector was transferred to an oven for drying. Then, cold pressing and cutting were performed, to obtain a negative electrode plate. A ratio of a coating thickness of the first negative electrode slurry to a coating thickness of the second negative electrode slurry was 5:5. A thickness of the negative electrode plate was the same as that in Example 5. A volume distribution particle size Dv50 of artificial graphite as the first carbon material was 9.5 µm, and a volume distribution particle size Dv50 of artificial graphite as the second carbon material was 12 µm.

### Example 19

A method for preparing a battery is similar to that in Example 5, and a difference lies in that processes for preparing a negative electrode plate are different.

Artificial graphite as a first carbon material, Super P as a conductive agent, styrene-butadiene rubber as a binder, and sodium carboxymethyl cellulose as a thickener were fully stirred and mixed at a weight ratio of 96.2:0.8:1.8:1.2 in an appropriate amount of solvent, namely, deionized water, to obtain first negative electrode slurry. Artificial graphite as a second carbon material, Super P as a conductive agent, styrene-butadiene rubber as a binder, and sodium carboxymethyl cellulose as a thickener were fully stirred and mixed at a weight ratio of 96.2:0.8:1.8:1.2 in an appropriate amount of solvent, namely, deionized water, to obtain second negative electrode slurry.

The second negative electrode slurry was coated on two surfaces of a negative electrode current collector which was a copper foil, the first negative electrode slurry was coated on the second negative electrode slurry, and after the negative electrode current collector coated with the slurry was air-dried at room temperature, the negative electrode current collector was transferred to an oven for drying. Then, cold pressing and cutting were performed, to obtain a negative electrode plate. A ratio of a coating thickness of the first negative electrode slurry to a coating thickness of the second negative electrode slurry was 5:5. A thickness of the negative electrode plate was the same as that in Example 5. A volume distribution particle size Dv50 of artificial graphite as the first carbon material was 14 µm, and a volume distribution particle size Dv50 of artificial graphite as the second carbon material was 12 µm.

### Example 20

A method for preparing a battery is similar to that in Example 5, and a difference lies in that processes for preparing a negative electrode plate are different.

Artificial graphite as a first carbon material, Super P as a conductive agent, styrene-butadiene rubber as a binder, and sodium carboxymethyl cellulose as a thickener were fully stirred and mixed at a weight ratio of 96.2:0.8:1.8:1.2 in an appropriate amount of solvent, namely, deionized water, to obtain first negative electrode slurry. Natural graphite as a second carbon material, Super P as a conductive agent, styrene-butadiene rubber as a binder, and sodium carboxymethyl cellulose as a thickener were fully stirred and mixed at a weight ratio of 96.2:0.8:1.8:1.2 in an appropriate amount of solvent, namely, deionized water, to obtain second negative electrode slurry.

The second negative electrode slurry was coated on two surfaces of a negative electrode current collector which was a copper foil, the first negative electrode slurry was coated on the second negative electrode slurry, and after the negative electrode current collector coated with the slurry was air-dried at room temperature, the negative electrode current collector was transferred to an oven for drying. Then, cold pressing and cutting were performed, to obtain a negative electrode plate. A ratio of a coating thickness of the first negative electrode slurry to a coating thickness of the second negative electrode slurry was 5:5. A thickness of the negative electrode plate was the same as that in Example 5. A volume distribution particle size Dv50 of artificial graphite as the first carbon material was 12 µm, and a volume distribution particle size Dv50 of natural graphite as the second carbon material was 14 µm.

**Table 4**

| Number | First carbon material | | Second carbon material | | Battery performance | |
|---|---|---|---|---|---|---|
| | Type | Dv50 (µm) | Type | Dv50 (µm) | Cycle performance (circle) | 50% SOC power performance (W/Wh) |
| Example 5 | Artificial graphite | 12 | Artificial graphite | 12 | 2212 | 7.10 |
| Example 18 | Artificial graphite | 9.5 | Artificial graphite | 12 | 2208 | 7.18 |
| Example 19 | Artificial graphite | 14 | Artificial graphite | 12 | 2215 | 7.01 |
| Example 20 | Artificial graphite | 12 | Natural graphite | 14 | 2154 | 7.42 |

It can be learned from test results in Example 4, Example 18, and Example 19 that, a structure of a negative electrode film layer on a single side of the negative electrode current collector is adjusted, and the volume distribution particle size Dv50 of the first carbon material is less than the volume distribution particle size Dv50 of the second carbon material, so that a first region of the negative electrode film layer has more ion intercalation channels, thereby facilitating rapid migration of ions to the second carbon material. In this way, the battery can have good power performance on the premise of having long cycle life.

It can also be learned from test results in Table 4 that, the structure of the negative electrode film layer on the single side of the negative electrode current collector is adjusted, and the first carbon material is artificial graphite, and the second carbon material is natural graphite, so that the battery can have the good power performance.

It should be noted that, the present application is not limited to the foregoing embodiments. The foregoing embodiments are only exemplary, and any embodiment having substantially the same technical idea and the same effects within the scope of the technical solutions of the present application shall fall within the technical scope of the present application. In addition, other embodiments constructed by applying various modifications conceivable to a person skilled in the art to the embodiments and combining some of the constituent elements of the embodiments without departing from the scope of the essence of the present application are also included in the scope of the present application.

## Claims

1. A battery cell, wherein
the battery cell comprises an electrode assembly and an outer package;
the electrode assembly comprises a positive electrode plate, the positive electrode plate comprises a positive electrode current collector and a positive electrode film layer arranged on at least one surface of the positive electrode current collector, the positive electrode film layer comprises a positive electrode active material, and the positive electrode active material comprises layered lithium-containing transition metal oxide in monocrystalline morphology;
the battery cell has a length direction, a width direction, and a thickness direction, and the thickness direction of the battery cell is a thickness direction of the positive electrode plate; and
a length of the battery cell is denoted as a, and a width of the battery cell is denoted as b, wherein a is greater than or equal to 180 mm, and a/b ranges from 2.0 to 10.5.

2. The battery cell according to claim 1, wherein a ranges from 190 mm to 1200 mm, and optionally ranges from 250 mm to 1200 mm.

3. The battery cell according to any one of claims 1 to 2, wherein a ranges from 350 mm to 1200 mm; and/or a/b ranges from 3.1 to 10.5.

4. The battery cell according to any one of claims 1 to 2, wherein a ranges from 250 mm to 800 mm; and/or a/b ranges from 2.5 to 8.0.

5. The battery cell according to any one of claims 1 to 4, wherein a ranges from 350 mm to 800 mm, and optionally ranges from 420 mm to 800 mm; and/or a/b ranges from 3.1 to 8.0, and optionally ranges from 3.3 to 8.0.

6. The battery cell according to any one of claims 1 to 5, wherein b ranges from 30 mm to 140 mm, and optionally ranges from 60 mm to 125 mm.

7. The battery cell according to any one of claims 1 to 6, wherein a thickness of the battery cell is denoted as c, wherein c is less than or equal to 70 mm, and optionally ranges from 10 mm to 60 mm.

8. The battery cell according to any one of claims 1 to 7, wherein
the outer package is of a soft pack material or a hard shell material; and/or
the electrode assembly is a laminated structure or a wound structure, and is optionally the laminated structure.

9. The battery cell according to any one of claims 1 to 8, wherein the electrode assembly comprises a main body portion and a tab portion extending out from the main body portion, wherein
a dimension of the tab portion in an extension direction of the main body portion after the tab portion is bent is less than or equal to 20 mm, and is optionally less than or equal to 15 mm; and/or
the tab portion comprises a positive electrode tab portion and a negative electrode tab portion, and the positive electrode tab portion and the negative electrode tab portion extend out from two opposite ends of the main body portion of the electrode assembly.

10. The battery cell according to any one of claims 1 to 9, wherein the positive electrode active material comprises the layered lithium-containing transition metal oxide in the monocrystalline morphology and layered lithium-containing transition metal oxide in polycrystalline morphology.

11. The battery cell according to claim 10, wherein in the positive electrode active material, a quantity ratio of the layered lithium-containing transition metal oxide in the monocrystalline morphology is denoted as S1, and a quantity ratio of the layered lithium-containing transition metal oxide in the polycrystalline morphology is denoted as S2, wherein S1>S2.

12. The battery cell according to any one of claims 1 to 11, wherein in the positive electrode active material, the quantity ratio of the layered lithium-containing transition metal oxide in the monocrystalline morphology is denoted as S1, wherein S1 is greater than or equal to 70%, and optionally ranges from 80% to 99%.

13. The battery cell according to any one of claims 1 to 12, wherein
a volume distribution particle size Dv50 of the positive electrode active material is less than or equal to 8 µm, and optionally ranges from 2 µm to 5.5 µm; and/or
a volume distribution particle size Dv90 of the positive electrode active material is less than or equal to 18 µm, and optionally ranges from 3 µm to 12 µm.

14. The battery cell according to any one of claims 1 to 13, wherein the electrode assembly comprises a negative electrode plate, the negative electrode plate comprises a negative electrode current collector and a negative electrode film layer arranged on at least one surface of the negative electrode current collector, the negative electrode film layer comprises a negative electrode active material, and the negative electrode active material comprises a carbon material, wherein
optionally, the carbon material comprises one or more of artificial graphite and natural graphite.

15. The battery cell according to any one of claims 1 to 14, wherein the electrode assembly comprises the negative electrode plate, the negative electrode plate comprises the negative electrode current collector and the negative electrode film layer arranged on the at least one surface of the negative electrode current collector, the negative electrode film layer comprises the negative electrode active material, and the negative electrode active material comprises a silicon-based material, wherein
optionally, the silicon-based material comprises one or more of a silicon element, an alkali metal element, and an alkali-earth metal element; and/or
optionally, a mass ratio of the silicon-based material in the negative electrode active material is greater than or equal to 5%, and more optionally ranges from 8% to 20%.

16. The battery cell according to any one of claims 14 to 15, wherein the negative electrode active material meets one or more of the following (1) to (3):
(1) a volume distribution particle size Dv10 of the negative electrode active material ranges from 4 µm to 8 µm, and optionally ranges from 4.5 µm to 6.5 µm;
(2) a volume distribution particle size Dv50 of the negative electrode active material ranges from 6 µm to 15 µm, and optionally ranges from 8 µm to 13 µm; and
(3) a volume distribution particle size Dv90 of the negative electrode active material ranges from 15 µm to 30 µm, and optionally ranges from 18 µm to 25 µm.

17. The battery cell according to any one of claims 1 to 13, wherein the electrode assembly comprises a negative electrode plate, the negative electrode plate comprises a negative electrode current collector and a negative electrode film layer arranged on at least one surface of the negative electrode current collector, the negative electrode film layer comprises a negative electrode active material, the negative electrode film layer has a first surface away from the negative electrode current collector and a second surface arranged opposite to the first surface, a thickness of the negative electrode film layer is denoted as H, a region within a thickness range from the first surface of the negative electrode film layer to 0.3H is denoted as a first region of the negative electrode film layer, a region within a thickness range from the second surface of the negative electrode film layer to 0.3H is denoted as a second region of the negative electrode film layer, the first region comprises a first negative electrode active material, the second region comprises a second negative electrode active material, the first negative electrode active material comprises a first carbon material, the second negative electrode active material comprises a second carbon material, and a volume distribution particle size Dv50 of the first carbon material is less than a volume distribution particle size Dv50 of the second carbon material.

18. The battery cell according to claim 17, wherein
a specific surface area of the first carbon material is smaller than a specific surface area of the second carbon material; and/or
a degree of graphitization of the first carbon material is less than a degree of graphitization of the second carbon material.

19. The battery cell according to any one of claims 17 to 18, wherein
the first carbon material comprises artificial graphite; and/or
the second carbon material comprises natural graphite.

20. The battery cell according to any one of claims 17 to 19, wherein
the first negative electrode active material and/or the second negative electrode active material further comprises a silicon-based material; and optionally, the first negative electrode active material and the second negative electrode active material comprise the silicon-based material.

21. A battery, comprising the battery cell according to any one of claims 1 to 20.

22. A power consuming apparatus, comprising the battery according to claim 21.
